# EUROPEAN PATENT APPLICATION

(11) **EP 4 712 582 A1**
(43) Date of publication of application: **18.03.2026**
(21) Application number: 23948747.3
(22) Date of filing: 11.08.2023
(51) Int. Cl.: H04W 52/02

(54) **WAKE-UP SIGNAL RECEIVING AND TRANSMITTING METHODS AND APPARATUSES, DEVICES, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: RGTH
(86) International application number: PCT/CN2023/112732
(87) International publication number: WO 2025/035312

(57) **Abstract**

Wake-up signal receiving and transmitting methods and apparatuses, devices, and a storage medium, relating to the technical field of mobile communication. The receiving method is executed by a terminal device, and comprises: in a first time interval, receiving a first signal by means of a first receiver of the terminal device, the first signal being used for waking up a second receiver of the terminal device. The transmitting method is executed by a network device, and comprises: in a first time interval, sending a first signal to a terminal device. Determining a transmission occasion and a monitoring occasion of the first signal by means of the first time interval greatly reduces the frequency of invalid transmission of wake up signals by the network device and the frequency of invalid monitoring of wake up signals by the terminal device, and enables the network device and the terminal device to determine whether to transmit and monitor a wake up signal, thereby achieving overall power saving optimization.

## Description

### TECHNICAL FIELD

The present application relates to the field of communications, and in particular, to a method for receiving a wake up signal, a method for transmitting a wake up signal, an apparatus, a device, and a storage medium.

### BACKGROUND

With the continuous development of mobile communication technology, types of terminal devices supported by mobile communication systems are becoming more and more diverse, and some types of terminal devices have very high requirements for power saving.

In the related art, a terminal device can be kept in a power saving state without requiring communication, and a network device can wake up the terminal device by a wake up signal.

### SUMMARY

Embodiments of the present application provide a method for receiving a wake up signal, a method for transmitting a wake up signal, an apparatus, a device, and a storage medium. The technical solutions are as follows.

In an aspect, the embodiments of the present application provide a method for receiving a wake up signal. The method is performed by a terminal device and includes:
receiving, by a first receiver of the terminal device, a first signal within a first time interval; where the first signal is used for waking up a second receiver of the terminal device.

In an aspect, the embodiments of the present application provide a method for transmitting a wake up signal. The method is performed by a network device and includes:
transmitting a first signal to a terminal device within a first time interval;
where the first signal is received by a first receiver of the terminal device, and the first signal is used for waking up a second receiver of the terminal device.

In another aspect, the embodiments of the present application provide an apparatus for receiving a wake up signal. The apparatus includes:
a receiving module, configured to receive a first signal by a first receiver of a terminal device within a first time interval; where the first signal is used for waking up a second receiver of the terminal device.

In another aspect, the embodiments of the present application provide an apparatus for transmitting a wake up signal. The apparatus includes:
a transmitting module, configured to transmit a first signal to a terminal device within a first time interval;
where the first signal is received by a first receiver of the terminal device, and the first signal is used for waking up a second receiver of the terminal device.

In another aspect, the embodiments of the present application provide a terminal device. The terminal device includes a processor, a memory and a transceiver;
where the memory has a computer program stored therein, and the processor is configured to execute the computer program, to enable the terminal device to implement the method for receiving a wake up signal above.

In another aspect, the embodiments of the present application provide a network device. The network device includes a processor, a memory and a transceiver;
where the memory has a computer program stored therein, and the processor is configured to execute the computer program, to enable the network device to implement the method for transmitting a wake up signal above.

In yet another aspect, the embodiments of the present application further provide a computer-readable storage medium, having a computer program stored therein. The computer program is loaded and executed by a processor to implement the method for receiving a wake up signal or the method for transmitting a wake up signal above.

In yet another aspect, the present application further provides a chip. The chip is used to run in a communication device, to enable the communication device to perform the method for receiving a wake up signal or the method for transmitting a wake up signal above.

In yet another aspect, the present application provides a computer program product. The computer program product includes computer instructions, and the computer instructions are stored in a computer-readable storage medium. A processor of a communication device reads the computer instructions from the computer-readable storage medium, and the processor executes the computer instructions, to enable the communication device to perform the method for receiving a wake up signal and the method for transmitting a wake up signal above.

In yet another aspect, the present application provides a computer program. The computer program is executed by a processor of a communication device to implement the method for receiving the wake up signal and the method for transmitting the wake up signal above.

The embodiments of the present application provide the method for receiving and transmitting a wake up signal. The transmitting occasion and the monitoring occasion of the first signal can be determined according to the first time interval, which greatly reduces the quantity of invalid transmissions of wake up signals by the network device and invalid monitoring of wake up signals by the terminal device. In this way, it is helpful for the network device and the terminal device to determine whether to perform transmission and monitoring of the wake up signals, thereby achieving overall power saving optimization.

### BRIEF DESCRIPTION OF THE DRAWINGS

In order to more clearly illustrate the technical solutions in the embodiments of the present application, the accompanying drawings required to be used in the description of the embodiments will be briefly introduced below. It is apparent that the accompanying drawings in the following description are only some embodiments of the present application, and for those skilled in the art, other accompanying drawings may be obtained from these accompanying drawings without any creative work.
FIG. 1 is a schematic diagram of a communication system architecture provided by an embodiment of the present application.
FIG. 2 is a schematic diagram of paging early indication (PEI) Occasion (PEI-O) location determination according to the present application.
FIG. 3 is a block diagram of a receiver system of a terminal device according to the present application.
FIG. 4 is a schematic diagram of coverage ranges of a low power wake up signal (LP-WUS) and a Paging physical downlink control channel (PDCCH) according to the present application.
FIG. 5 is a flowchart of a method for receiving and transmitting a wake up signal according to an embodiment of the present application.
FIG. 6 is a flowchart of a method for receiving and transmitting a wake up signal according to an embodiment of the present application.
FIG. 7 is a schematic diagram of a switching method for determining different modes based on a time domain pattern.
FIG. 8 is a schematic diagram of another switching method for determining different modes based on a time domain pattern.
FIG. 9 is a flowchart of a method for receiving and transmitting a wake up signal according to an embodiment of the present application.
FIG. 10 is a schematic diagram for determining monitoring of LP-WUS based on MR measurement/synchronization.
FIG. 11 is a schematic diagram for determining monitoring of LP-WUS based on MR measurement/synchronization/paging.
FIG. 12 is a flowchart of a method for receiving and transmitting a wake up signal according to an embodiment of the present application.
FIG. 13 is a schematic diagram for determining monitoring of LP-WUS based on an active cycle of LP-WUS.
FIG. 14 is another schematic diagram for determining monitoring of LP-WUS based on an active cycle of LP-WUS.
FIG. 15 is a block diagram of an apparatus for receiving a wake up signal provided by an embodiment of the present application.
FIG. 16 is a block diagram of an apparatus for transmitting a wake up signal provided by an embodiment of the present application.
FIG. 17 is a schematic structural diagram of a communication device provided by an embodiment of the present application.

### DETAILED DESCRIPTION

To make the purposes, technical solutions and advantages of the present application clearer, the implementations of the present application will be further described in detail below with reference to the accompanying drawings.

The network architecture and service scenarios described in the embodiments of the present application are intended to more clearly illustrate the technical solutions of the embodiments of the present application, and do not constitute a limitation on the technical solutions provided by the embodiments of the present application. A person skilled in the art will appreciate that, with the evolution of the network architecture and the emergence of new service scenarios, the technical solutions provided by the embodiments of the present application are equally applicable to similar technical problems.

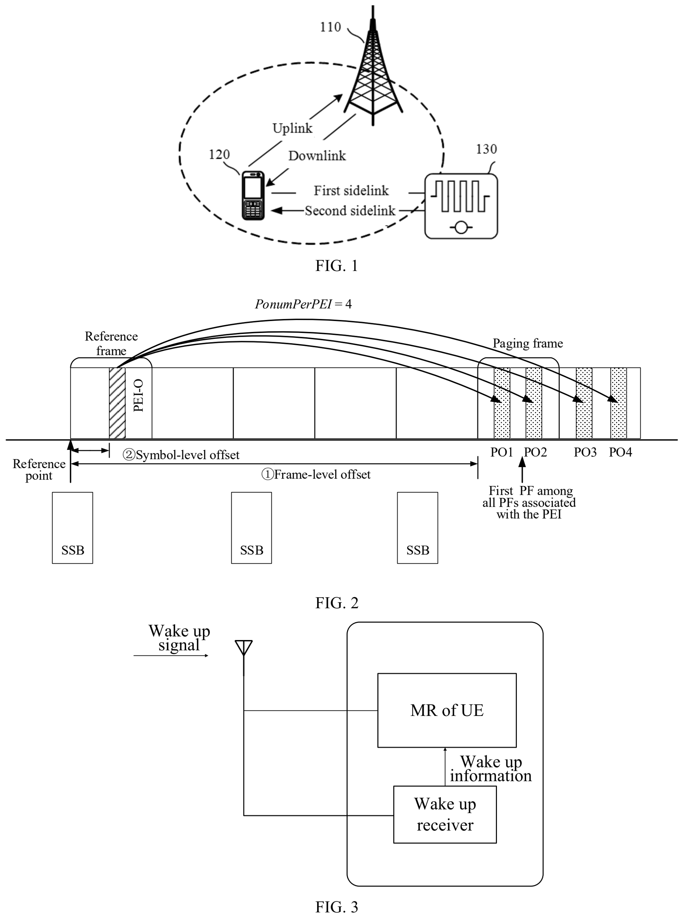

FIG. 1 illustrates a schematic diagram of a communication system according to an exemplary embodiment of the present application. The communication system includes a network device 110 and a terminal device 120, and/or a terminal device 120 and a terminal device 130, which is not limited in the present application.

The network device 110 in the present application provides a wireless communication function, and the network device 110 includes but is not limited to: an evolved Node B (eNB), a radio network controller (RNC), a Node B (NB), a base station controller (BSC), a base transceiver station (BTS), a home base station (e.g., a Home Evolved Node B or a Home Node B (HNB)), a baseband unit (BBU), an access point (AP) in a wireless fidelity (Wi-Fi) system, a wireless relay node, a wireless backhaul Node, a transmission point (TP) or a transmission and reception point (TRP); and may also be a next generation Node B (gNB) or a transmission point (TRP or TP) in a 5th generation (5G) mobile communication system; or one or a group of antenna panels (including multiple antenna panels) of a base station in the 5G system, or a network node constituting the gNB or transmission point, e.g., a base band unit (BBU) or a distributed unit (DU), or a base station in a beyond 5th generation (B5G) or 6th generation (6G) mobile communication system; or a core network (CN), a Fronthaul, a Backhaul, a radio access network (RAN), a network slice; or a serving cell, a primary cell (PCell), a primary secondary cell (PSCell), a special cell (SpCell), a secondary cell (SCell) or a neighboring cell of a terminal device.

The terminal device 120 and/or terminal device 130 in the present application are also referred to as a user equipment (UE), an access terminal, a user unit, a user station, a mobile station, a mobile platform, a remote station, a remote terminal, a mobile device, a user terminal, a terminal, a wireless communication device, a user agent and a user device. The terminal includes but is not limited to a handheld device, a wearable device, a vehicle-mounted device, and an IoT device, e.g., a mobile phone, a tablet computer, an e-book reader, a laptop computer, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, and a wireless local loop (WLL) station, a personal digital assistants (PDA), a set-top box (STB), a customer premises equipment (CPE).

The network device 110 and the terminal device 120 communicate with each other via a certain air interface technology, such as a Uu interface.

Exemplarily, there are two communication scenarios between the network device 110 and the terminal device 120: an uplink communication scenario and a downlink communication scenario, where the uplink communication refers to transmitting a signal to the network device 110, and the downlink communication refers to transmitting a signal to the terminal device 120.

The terminal device 120 and the terminal device 130 communicate with each other via a certain air interface technology, such as a PC5 interface.

In some embodiments, there are two communication scenarios between the terminal device 120 and the terminal device 130: a first sidelink communication scenario and a second sidelink communication scenario. The first sidelink communication refers to transmitting a signal to the terminal device 130; and the second sidelink communication refers to transmitting a signal to the terminal device 120.

The terminal device 120 and the terminal device 130 are both within the network coverage range and located in the same cell; or the terminal device 120 and the terminal device 130 are both within the network coverage range but located in different cells; or the terminal device 120 is within the network coverage range but the terminal device 130 is outside the network coverage range.

The technical solutions provided by the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolution system of an NR system, a LTE-based access to unlicensed spectrum (LTE-U) system, an NR-based access to unlicensed spectrum (NR-U) system, a terrestrial networks (TN) system, a non-terrestrial networks (NTNs) system, a wireless local area network (WLAN), wireless fidelity (Wi-Fi), a cellular IoT system or a cellular passive IoT system. The technical solutions may also be applied to subsequent evolution systems of the 5G NR system, as well as B5G, 6G and subsequent evolution systems. In some embodiments of the present application, "NR" may also be referred to as a 5G NR system or a 5G system, where the 5G mobile communication system may include non-standalone (NSA) networking and/or standalone (SA) networking.

The technical solutions provided by the embodiments of the present application may also be applied to machine type communication (MTC), long term evolution-machine (LTE-M), device to device (D2D) network, machine to machine (M2M) network, Internet of Things (IoT) network or other networks. The IoT network may include, for example, Internet of vehicles. The communication manner in the Internet of vehicles system is collectively referred to as vehicle to X (V2X), where X may represent anything. For example, V2X may include vehicle to vehicle (V2V) communication, vehicle to infrastructure (V2I) communication, vehicle to pedestrian (V2P) communication, vehicle to network (V2N) communication or the like.

Before introducing the technical solutions of the present application, some background technical knowledge related to the present application will be introduced and described first. The following related technologies, as optional solutions, can be arbitrarily combined with the technical solutions of the embodiments of the present application, and all of them fall within the scope of protection of the embodiments of the present application. The embodiments of the present application include at least part of the following content.

### 1) Power saving design of terminal device

To reduce power consumption of the terminal device, there is a discontinuous reception (DRX) mechanism in both LTE and NR systems, so that the terminal device does not have to turn on the receiver all the time in a case where there is no data reception, but enters a discontinuous reception state, thereby achieving the purpose of saving power. In the evolution of NR technology, higher requirements are put forward for power saving of user equipment (UE). For example, in the existing DRX mechanism, during each on-duration, the UE needs to continuously detect the physical downlink control channel (PDCCH) to determine whether the base station schedules data transmission to itself. However, for most UEs, there may be no need to receive data transmission for a long time, but they still need to keep waking up regularly to monitor possible downlink transmissions. For such UEs, there remains room for further optimization of power saving of the terminal device.

In the R16 standard, a power saving signal is introduced to achieve further power saving of the terminal device in the radio resource control (RRC) connected state. The power saving signal is used in conjunction with the DRX mechanism, and the terminal device receives an indication of the power saving signal before on Duration. In a case where the terminal device has data to transmit in the upcoming on Duration, the network "wakes up" the terminal device by the power saving signal to monitor the PDCCH during the upcoming on Duration; otherwise, the network indicates to the terminal device to continue "sleeping" by the power saving signal, and the terminal device does not need to monitor the PDCCH during the upcoming on Duration. Compared with the existing DRX mechanism, in a case where the terminal device has no data transmission, the terminal device can omit the monitoring of the PDCCH during on Duration, thereby achieving power saving.

In the R17 standard, a terminal device power saving enhancement project is established to further standardize the power saving of the terminal device in the RRC IDLE state and RRC INACTIVE state. The power consumption of the terminal device in the RRC IDLE and RRC INACTIVE states mainly comes from periodic discontinuous reception of paging, including performing time frequency synchronization recovery and automatic gain control (AGC) before the paging occasion arrives and detecting the power consumption of the paging PDCCH during the paging occasion. To reduce the power consumption in the process of paging reception, the R17 standard introduces a power saving signal for paging reception, referred to as paging early indication (PEI), which indicates whether the terminal device needs to receive paging at the paging occasion before the paging occasion of the terminal device arrives.

### 2) PEI design in R17

### ①PEI monitoring occasion (PEI Occasion, PEI-O)

PEI-O is a set of multiple PDCCH monitoring occasions. The specifics are as follows.
1. When the number of PDCCH monitoring occasions (nrofPDCCH-MonitoringOccasionPerSSB-InPO) corresponding to one synchronization signal block (SSB) within a paging occasion is not configured, the PEI monitoring occasion is a set of S consecutive PDCCH monitoring occasions.

Here, S is the number of actually transmitted SSBs determined according to the time domain positions of SSBs (ssb-PositionsInBurst) transmitted in the half-frame with the synchronization signal (SS)/PBCH block in SIB1.

Within the PEI monitoring occasion, the Quasi-Colocation (QCL) relationship of the K-th PEI PDCCH monitoring occasion is the same as the K-th PDCCH monitoring occasion for paging in the paging occasion (PO) (the reference of the QCL is the SSB).

2. In the unlicensed spectrum, the PEI monitoring occasion is a set of (S*X) consecutive PDCCH monitoring occasions.

Here, S is the number of actually transmitted SSBs determined according to ssb-PositionsInBurst in SIB1. If nrofPDCCH-MonitoringOccasionPerSSB-InPO is configured, X takes the configured value; otherwise, X=1.

The (x*S+K)-th PDCCH monitoring occasion within the PEI monitoring occasion corresponds to the K-th transmitted SSB, where x=0, 1,..., X-1, K=1, 2..., S. If X>1, when the terminal device detects one PEI within the PEI monitoring occasion, the terminal device does not need to continue monitoring the subsequent monitoring occasions associated with the PEI monitoring occasion.

### ②Mapping between PEI and PO

The network may configure multiple POs for each paging frame (PF). If each PEI corresponds to one PO, there will be a large number of independent PEIs, which will increase the PEI overhead. On the other hand, the PEIs corresponding to these POs may overlap in the time domain. In the Rel-15/16, one wake up signal (WUS) may be associated with one PO or multiple POs. When performing PEI design, in order to reduce PEI overhead and avoid PEI overlap, a mapping mechanism similar to WUS is finally determined, that is, one PEI may be associated with one PO or multiple POs. The specific design is as follows.

Support one PEI associated with high-layer configuration parameter (POnumPerPEI) POs
1. The POnumPerPEI POs associated with the PEI may be in one or more PFs. The maximum number of PFs associated with one PEI is 2.
2. POnumPerPEI is a factor of N*N_{S}, where N is the number of paging frames in a paging cycle and N_{S} is the number of POs in a paging frame. POnumPerPEI may be configured by the system information block (SIB) and value range of the POnumPerPEI is {1, 2, 4, 8}.

### ③Determination of PEI-O location

FIG. 2 illustrates a schematic diagram of PEI-O location determination according to an exemplary embodiment of the present application. The terminal device determines the location of PEI-O corresponding to PO based on a reference point and an offset value (from the reference point to the first PDCCH monitoring occasion of PEI-O).
1. A reference frame is determined first, and a start point of the reference frame is served as the reference point.

Based on the first PF among all PFs associated with the PEI (in a case where one PEI is associated with multiple POs, the possibly associated POs are located in different PFs), the reference frame is determined by a frame-level offset value.

The frame-level offset value from the first PF among all PFs associated with the PEI to the reference frame is configured by the SIB.

2. Based on the reference point and a symbol-level offset value, the location of the first PDCCH monitoring occasion within PEI-O is determined.

The symbol-level offset value from the reference point to the first PDCCH monitoring occasion within PEI-O may be configured via the SIB. The specific offset value is provided by an offset (expressed as symbol number) from a start of the reference frame of PEI-O to a start of the first PDCCH monitoring occasion of PEI-O.

### 3) LP-WUS/WUR in 3GPP R18

In the research topic of 3GPP R18, further power saving processing of the terminal device is considered. The research introduces a low power wake up receiver (LP-WUR) and designs a low power wake up signal (LP-WUS). The LP-WUS signal is monitored by the LP-WUR. When the wake up signal from the network device is received, the LP-WUR wakes up the main receiver (i.e., Main Radio, MR). Specifically, when the LP-WUR is used to monitor the wake up signal, the MR may be in an extremely low power consumption (i.e., Ultra Deep Sleep) state, thereby achieving the entire power saving of the terminal device.

### ①Clock consideration for LP-WUR (as of RAN1#113 meeting)

During the research on the LP-WUS/WUR, the RAN1 working group reached a preliminary consensus on the accuracy of the LP-WUR oscillator, and the following four options are considered.
Option 1, the maximum frequency error of the oscillator is 200ppm and the frequency drift of the oscillator is 0.1ppm/s;
Option 2, the maximum frequency error of the oscillator is 50ppm and the frequency drift of the oscillator is 0.1ppm/s;
Option 3, the maximum frequency error of the oscillator is 10ppm and the frequency drift of the oscillator is 0.05ppm/s;
Option 4, the maximum frequency error of the oscillator is 5ppm and the frequency drift of the oscillator is 0.05ppm/s.

Considering the maximum frequency error of the real time clock (RTC) of the LP-WUR is 20ppm and the frequency drift of the RTC of the LP-WUR is 0.1ppm/s.

### ②Power consumption model of LP-WUR (as of RAN1#113 meeting)

As shown in Table 1, the RAN1 working group reached the following conclusions on the power consumption model of LP-WUR (for research and evaluation purposes only; and the final design of the LP-WUR may have multiple types or just one type).

**Table 1**

| **Power State** | **Relative Power (unit)** | **Transition energy: (unit multiplied by ms)** |
|---|---|---|
| **Off** | 0.001/ 0.02/ 0.1 | [TLR, ramp-up* (PON+POFF)/2] |
| **On** | 0.01/0.05/0.1/0.2/0.5/1/2/4/10/20/30 | |

1. Whether to perform classification or sub-classification requires further study.
2. The mapping of power consumption values to LP-WUR receiver structures or LP-WUR operating modes requires further study.
3. If the power consumption value of the LP-WUR in the Power on state is 10/20/30:
   envelope detection-based receivers cannot be used when performing LP-WUS monitoring; and
   when the noise figure is less than [MR noise figure+2.5dB], an orthogonal frequency-division multiplexing (OFDM) receiver is used to perform LP-WUS monitoring.
4. If the power consumption value of the LP-WUR in the Power on state is 0.2/0.5/1/2/4:
   when performing LP-WUS monitoring, other noise figures that are greater than [MR Noise figure + 2.5dB] are considered.
5. If the power consumption value of the LP-WUR in the Power Off state is 0.001:
   the oscillators in Options 1, 2, 3 and 4 are not applicable and the RTC may only maintained.
6. If the power consumption value of the LP-WUR in the Power Off state is 0.1:
   the oscillators in Options 3 and 4 cannot be used for the envelope detection-based receivers.

### ③Measurement design (as of RAN1#113 meeting)

As of the RAN1#113 meeting, the following consensus is reached on radio resource management (RRM) measurements of LP-WUR.
1. Regarding RRM serving cell measurements performed by the LP-WUR based on the reference signal, RAN1 determines at least the following metrics for further study and evaluation, including feasibility, complexity and power consumption or the like:
   low power received signal strength indicator (LP-RSSI) or power detection: a linear average of the total power received on the RSSI resource;
   low power reference signal received power (LP-RSRP): a linear average of the received power of reference signals transmitted by the signal source or of a portion of signals;
   low power signal to interference plus noise ratio (LP-SINR) = LP-RSRP/power of interference and noise;
   low power reference signal receiving quality (LP-RSRQ) = [N x] LP-RSRP/LP-RSSI, where N is a factor that evaluates the difference in resource sizes between LP-RSRP and LP-RSSI;
   the accuracy of AGC, requiring at least a 4-bit analog-to-digital converter (ADC); and
   the reference signals for measurements may be: SSB, LP-WUS waveform sequence, low power synchronization signal (LP-SS), or the like; where the SSB includes primary synchronization signal (PSS), secondary synchronization signal (SSS), physical broadcast channel (PBCH) and demodulation reference signal (DMRS).
2. For Idle/Inactive mode, the offloading of the RRM measurements for the serving cell to the LP-WUR under certain conditions is studied, and the RRM measurement relaxation for the serving cell/neighboring cell in the MR is considered.
   periodic reference signals used for LP-WUR measurements: SSB (PSS/SSS/PBCH DMRS), LP-WUS waveform sequence, LP-SS, or the like.

MR performs RRM measurements:
Option 1: if the MR considers RRM measurement relaxation, then the relaxed period is adopted; and
Option 2: RRM measurements of the MR are performed only when the LP-WUR measurements based on the reference signals meet certain conditions, such as being below a threshold.

### ④Active/inactive design of LP-WUS monitoring (as of RAN1#113 meeting)

1. For the IDLE/INACTIVE state, the RAN1 working group considers searching the following methods for the LP-WUR to activate and deactivate the LP-WUS monitoring for the UE:
   Option 1:
      the gNB transmits a conventional paging indication and LP-WUS;
      the activation and/or deactivation of the LP-WUS monitoring is determined according to the UE implementation; and
      the activation/deactivation may be performed according to channel conditions, such as according to whether coverage is sufficient.
   Option 2:
      the gNB transmits a conventional paging indication and LP-WUS;
      the activation and/or deactivation of the LP-WUS monitoring is determined according to a pre-configured criteria; and
      the activation/deactivation may be performed according to channel conditions, such as according to whether coverage is sufficient.
   Option 3:
      the activation/deactivation of the LP-WUS monitoring is determined according to signaling within the cell.
2. For the RRC CONNECTED state, the activation/deactivation of the LP-WUS monitoring may be implemented in at least one of the following ways:
   by the RRC signaling of the gNB, which may or may not be based on the support of the UE;
   by Layer 1/Layer 2 (L1/L2) LP-WUS activation/deactivation signaling of the gNB, which may or may not be based on the support of the UE; or
   based on preconfigured criteria, such as a timer.

The monitoring of the LP-WUS by the terminal device is known to the gNB.

In 3GPP R18, research has been carried out on the LP-WUS and the LP-WUR. It is currently in the SI stage and the standards have not yet been determined.

The wake up receiver has the characteristics of extremely low cost, extremely low complexity and extremely low power consumption, and it mainly receives the wake up signal in an envelope detection-based manner. Therefore, the modulation mode, the waveform or the like of the LP-WUS received by the wake up receiver is different from those of the signal carried by the PDCCH defined in the existing 3GPP R16 and R17 standards. The wake up signal is mainly an envelope signal that performs amplitude shift keying (ASK) modulation on the carrier signal. The demodulation of the envelope signal is also mainly completed based on the power provided by the wireless radio frequency signal to drive the low power circuit, so that the wake up receiver may be passive. The wake up receiver may also be powered by the terminal device. No matter which power supply mode, the receiver greatly reduces the power consumption compared to the conventional receiver of the UE. The wake up receiver may be combined with the UE as an additional module of the UE receiver, or the wake up receiver may be used alone as a wake up function module of the UE. FIG. 3 illustrates a block diagram of a receiver system of a terminal device according to an exemplary embodiment of the present application. The wake up receiver receives a wake up signal. If the UE needs to turn on the receiver, the UE may be indicated to turn on the MR. Otherwise, the MR of the UE may be in a turned-off state.

The LP-WUS signal may be used for waking up the MR. Specifically, the LP-WUR of the UE monitors the LP-WUS. When the LP-WUS transmitted to the terminal device or the terminal group where the terminal device is located is received, the LP-WUR wakes up the MR. Generally, the LP-WUR may continuously perform the LP-WUS monitoring, or perform discontinuous LP-WUS monitoring using a duty cycle manner.

When the network device needs to communicate with the UE including the LP-WUR, the network device may first transmit the LP-WUS signal to wake up the terminal device, turn on the MR of the UE, and receive signals such as PDCCH and/or PDSCH transmitted by the network device through the MR.

Considering factors such as the implementation and sensitivity differences between LP-WUR and MR, it is difficult to achieve the same coverage effect for the LP-WUR and the MR. In other words, the coverage range of the LP-WUR receiving the LP-WUS is often different from the coverage range of the MR receiving the PDCCH and PDSCH.

For a UE (legacy UE) that does not include an LP-WUR prior to 3GPP R17, the network device may perform paging the UE by the Paging PDCCH.

For a UE including an LP-WUR introduced in 3GPP R18, the network device may wake up the MR of the UE by the LP-WUS to implement paging of the UE. The UE may be paged by the LP-WUS, or the UE may be paged by the Paging PDCCH after waking up the MR of the UE.

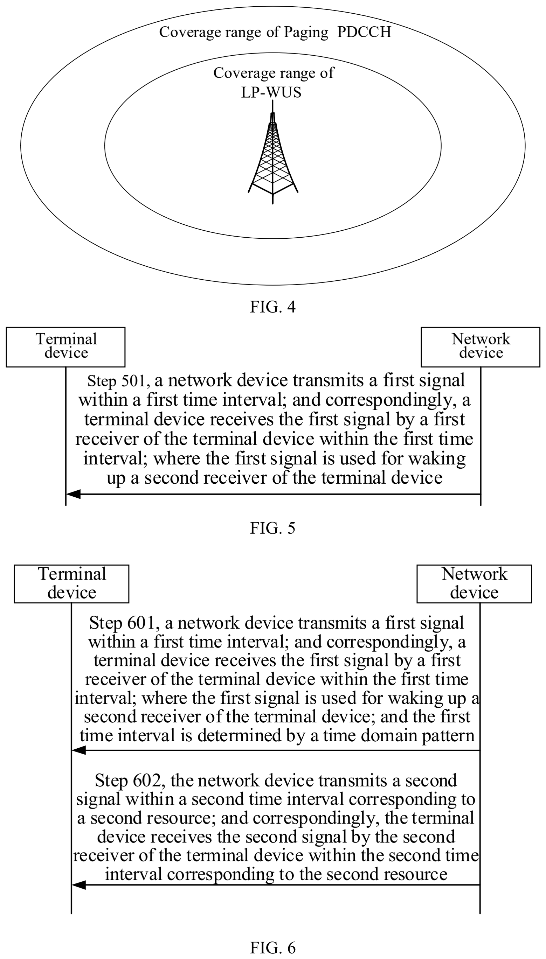

FIG. 4 illustrates coverage ranges of an LP-WUS and a Paging PDCCH signal according to an exemplary embodiment of the present application. Terminal devices in the same network device deployment cell may be located within the LP-WUS coverage range or outside the LP-WUS coverage range.

When the UE is located within the coverage range of the LP-WUS, the UE can monitor the LP-WUS through the LP-WUR. If the UE monitors the LP-WUS transmitted to itself or the terminal group where the UE is located, the UE wakes up the MR to monitor the paging PDCCH or PDSCH. In this case, the network device may wake up the terminal device by the LP-WUS.

When the UE is located outside the coverage range of the LP-WUS, the UE cannot wake up the MR by the LP-WUS. In this case, the UE needs to monitor whether there is a paging signal transmitted to itself by the network device through the MR.

For the network device, when it is necessary to initiate paging to a terminal device, in some cases, the location of the terminal device is unknown, that is, it is unknown whether the terminal device is located within the coverage range of the LP-WUS.

In summary, due to the simplified implementation, the sensitivity of the LP-WUR is usually lower than that of the MR, especially in a case where the LP-WUR needs to maintain extremely low power consumption. This causes the coverage range of the LP-WUS to be different from the coverage range of the signal received by the MR (e.g., PDCCH), which brings challenges to synchronization, measurement, paging and other processes. For the MR with the LP-WUR, the following problems need to be solved: how to determine whether to monitor the LP-WUS or switch to monitoring (legacy) wake up signals (e.g., WUS and PEI) prior to 3GPP R17 due to being outside the coverage range of the LP-WUS, and whether the network device wakes up the terminal device (or indicates the terminal device to monitor paging/downlink control signals) by the LP-WUS or the PEI/WUS.

Referring to FIG. 5, a flowchart of a method for receiving and transmitting a wake up signal provided by an embodiment of the present application is illustrated. The method may be interactively performed by a terminal device and a network device, where the terminal device may be the terminal device 120 or the terminal device 130 in the network architecture illustrated in FIG. 1, and the network device may be the network device 110 in the network architecture illustrated in FIG. 1. The method may include the following steps.

In step 501, a network device transmits a first signal within a first time interval; and correspondingly, a terminal device receives the first signal by a first receiver of the terminal device within the first time interval; where the first signal is used for waking up a second receiver of the terminal device.

The first signal may be an LP-WUS, the first receiver may be an LP-WUR, and the second receiver may be an MR.

In summary, in the solutions shown in the embodiments of the present application, the transmitting occasion and the monitoring occasion of the first signal can be determined according to the first time interval, which greatly reduces the quantity of invalid transmissions of wake up signals by the network device and invalid monitoring of wake up signals by the terminal device. In this way, it is helpful for the network device and the terminal device to determine whether to perform transmission and monitoring of the wake up signals, thereby achieving overall power saving optimization.

Based on the solutions illustrated in FIG. 5, referring to FIG. 6, a flowchart of a method for receiving and transmitting a wake up signal provided by an embodiment of the present application is illustrated. The method may be interactively performed by a terminal device and a network device, where the terminal device may be the terminal device 120 or the terminal device 130 in the network architecture illustrated in FIG. 1, and the network device may be the network device 110 in the network architecture illustrated in FIG. 1. The method may include the following steps.

In step 601, a network device transmits a first signal within a first time interval; and correspondingly, a terminal device receives the first signal by a first receiver of the terminal device within the first time interval; where the first signal is used for waking up a second receiver of the terminal device; and the first time interval is determined by a time domain pattern.

The time domain pattern is a data structure used for determining the distribution locations of the first time interval in the time domain.

That is, within the first time interval determined by the time domain pattern, the network device transmits the first signal to the terminal device, and the terminal device receives the first signal by the first receiver; where the first signal is used for waking up the second receiver of the terminal device.

The time domain pattern is similar to the frame structure in the NR, and is used for determining the distribution locations of the first time interval in the time domain. Determining the first time interval by the time domain pattern may effectively improve the accuracy and controllability of the network device transmitting the first signal and the terminal device monitoring the first signal, and further optimize the overall power saving.

In some embodiments, the time domain pattern includes a first time domain pattern; the first time domain pattern is used for indicating distribution of resource locations of a first resource in the time domain; and the first time interval is a time interval corresponding to the first resource.

That is, the time interval corresponding to the first resource is the first time interval that needs to be clarified in the embodiments of the present application, and the distribution of the resource locations of the first resource in the time domain may be determined by the first time domain pattern included in the time domain pattern. Therefore, the specific distribution of the first time interval in the time domain may be determined by the first time domain pattern, which further optimizes the technical solutions of the embodiments of the present application.

In some embodiments, the first resource is a resource through which the network device transmits the first signal.

That is, the network device transmits the first signal on the first resource. In the embodiments of the present application, the correlation between the first signal and the first resource is further clarified, which may improve the accuracy of the technical solutions of the embodiments of the present application.

In some embodiments, the first resource is a resource corresponding to a first mode.

That is, the system may configure the first mode for the terminal device and/or network device, and the first resource may be a resource pre-configured for the first mode. In the embodiments of the present application, the correlation between the working mode of the device and the first resource is further clarified, which may improve the accuracy of the technical solutions of the embodiments of the present application.

In some embodiments, the first mode is a mode in which the network device transmits the first signal; and/or the first mode is a mode in which the terminal device receives the first signal.

In the above embodiments, the network device in the system may have the first mode, and the network device may transmit the first signal under the first mode; or the terminal device in the system may have the first mode, and the terminal device may receive the first signal under the first mode; or the network device and the terminal device in the system may have the first mode, and the network device and the terminal device may transmit and receive the first signal under the first mode.

That is, in the embodiments of the present application, the working mode in which the network device transmits the first signal and/or the terminal device receives the first signal may be defined as the first mode. In the embodiments of the present application, the specific working mode corresponding to the first mode in the network device and the terminal device is further clarified, which may improve the accuracy of the technical solutions of the embodiments of the present application.

In step 602, the network device transmits a second signal within a second time interval corresponding to a second resource; and correspondingly, the terminal device receives the second signal by the second receiver of the terminal device within the second time interval corresponding to the second resource.

The time domain pattern further includes a second time domain pattern; and the second time domain pattern is used for indicating distribution of resource locations of a second resource in the time domain.

That is, the time domain pattern may include the first time domain pattern and the second time domain pattern. Accordingly, the time interval corresponding to the second resource is the second time interval that needs to be clarified in the embodiments of the present application, and the distribution of the resource locations of the second resource in the time domain may be determined by the second time domain pattern included in the time domain pattern. Therefore, the specific distribution of the second time interval in the time domain may be determined by the second time domain pattern, which further optimizes the technical solutions of the embodiments of the present application.

That is, the network device transmits the second signal to the terminal device within the second time interval determined by the time domain pattern, and the terminal device receives the second signal by the second receiver.

In some embodiments, the first time domain pattern and the second time domain pattern may be two mutually independent time domain patterns.

Alternatively, the first time domain pattern and the second time domain pattern may be the same time domain pattern, that is, the time domain pattern may indicate the distribution of resources corresponding to two different signals in the time domain.

In some embodiments, the second signal includes a downlink signal for paging.

That is, the second signal may be the downlink signal for paging, that is, other non-first signals may be used for paging the UE, for example, a legacy paging mechanism (i.e., directly transmitting Paging PDCCH) may be used for paging the UE, or a PEI may be used for providing an early indication for paging.

In some embodiments, the second resource is a resource through which the network device transmits the second signal.

That is, the network device transmits the second signal on the second resource. The embodiments of the present application further clarify the correlation between the second signal and the second resource, which may improve the accuracy of the technical solutions of the embodiments of the present application.

In some embodiments, the second resource is a resource corresponding to a second mode.

That is, the system may configure the second mode for the terminal device and/or network device, and the second resource may be a resource pre-configured for the second mode. In the embodiments of the present application, the correlation between the working mode of the device and the second resource is further clarified, which may improve the accuracy of the technical solutions of the embodiments of the present application.

In some embodiments, the second mode is a mode in which the network device transmits the second signal; and/or the second mode is a mode in which the terminal device receives the second signal.

In the above embodiments, the network device in the system may have the second mode, and the network device may transmit the second signal under the second mode; or the terminal device in the system may have the second mode, and the terminal device may receive the second signal under the second mode; or the network device and the terminal device in the system may have the second mode, and the network device and the terminal device may transmit and receive the second signal under the second mode.

That is, the working mode in which the network device transmits the second signal and/or the terminal device receives the second signal is defined as the second mode. In the embodiments of the present application, the specific working mode corresponding to the second mode in the network device and the terminal device is further clarified, which may improve the accuracy of the technical solutions of the embodiments of the present application.

In some embodiments, the time domain pattern is predefined by a protocol; or the time domain pattern is semi-statically configured by the network device; or the time domain pattern is dynamically configured by the network device; or the time domain pattern is semi-statically configured and dynamically configured by the network device.

That is, the definition or configuration of the time domain pattern may be flexibly selected according to actual needs, which may effectively improve the flexibility and practicality of the technical solutions of the present application. For example, one or more time domain patterns are predefined by a protocol; or one or more time domain patterns are semi-statically configured by the network device; or one or more time domain patterns are dynamically configured by the network device; or multiple time domain patterns are semi-statically configured by the network device, and subsequently one or more of the above multiple time domain patterns are dynamically configured/enabled by the network device.

It should be noted that the first signal may be the LP-WUS, the first receiver may be the LP-WUR, the second receiver may be the MR, and the second signal may be a paging signal, such as Paging PDCCH.

When the network device supports the UE including the LP-WUR, it is not necessary to always wake up the UE by means of waking up the MR through the LP-WUS, and the legacy mechanism may still be used, that is, directly transmitting the Paging PDCCH is used for paging the MR of the UE, or the PEI is used for providing an early indication for paging.

Therefore, it is determined whether it is necessary to wake up the MR of the UE by the LP-WUS according to the time domain pattern, that is, the switching between the first mode and the second mode, so as to achieve the purpose of power saving of the UE.

The first mode may be a mode in which the network device wakes up the UE by the LP-WUS. In this case, the UE may monitor the LP-WUS in a continuously monitoring the LP-WUS manner or in a duty cycle manner. That is, the first mode includes at least two paging cycles and at least two LP-WUS monitoring occasions.

The second mode may be a mode in which the network device wakes up the UE by a non-LP-WUS, for example, by the legacy mechanism, that is, the MR of the UE is paged by directly transmitting the paging PDCCH, or by indicating early paging through the PEI.

In summary, the network device and the UE only need to perform transmission and monitoring of the LP-WUS on the time domain resource corresponding to the first mode, respectively; and on the time domain resource corresponding to the second mode, the network device does not perform transmission of the LP-WUS, but uses the legacy paging mechanism to page the UE, the UE turns on the MR and monitors the paging transmitted by the network device through the MR, and the UE does not perform monitoring of the LP-WUS.

In some embodiments, the time domain pattern may be used for determining the mode distribution of the first mode and the second mode within a continuous time period T, where the continuous time period T is periodically distributed in the time domain.

There is at least one first mode and at least one second mode within the continuous time period T.

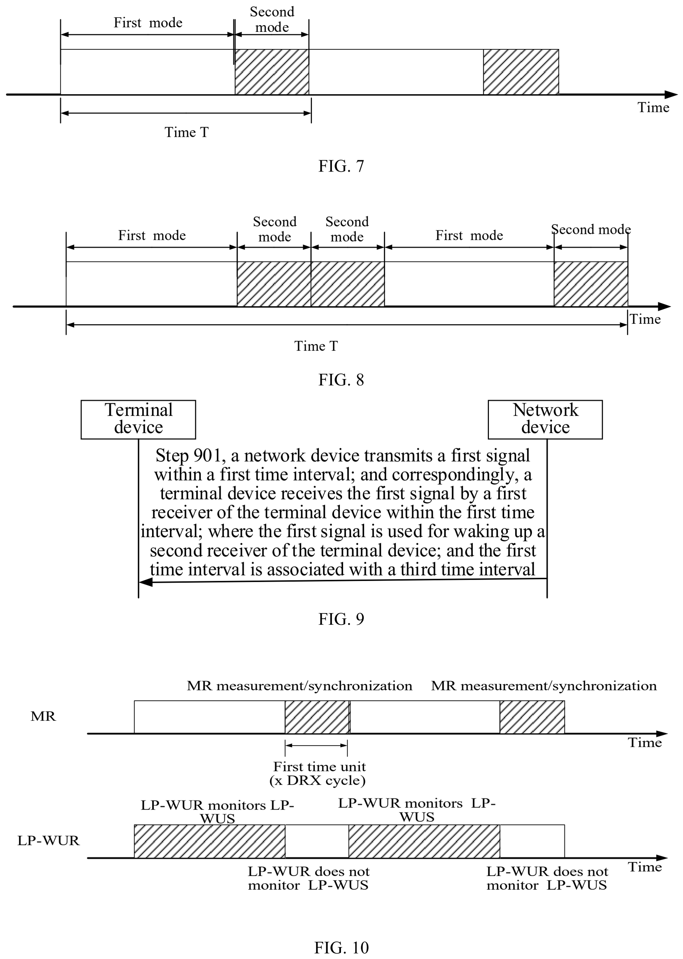

Referring to FIG. 7, a schematic diagram of a switching method for determining different modes based on a time domain pattern is illustrated. Within a continuous time period T in the time domain includes one first mode and one second mode, and the continuous time period T is periodically distributed in the time domain.

Referring to FIG. 8, a schematic diagram of another switching method for determining different modes based on a time domain pattern is illustrated. Within a continuous time period T in the time domain, it sequentially includes one first mode, two second modes, one first mode and one second mode.

In some embodiments, the distribution of the first mode and the second mode in the time domain may be fixed, which may be:
a fixed time domain pattern design agreed upon by the protocol, for example, the time domain ratio of the first mode and the second mode is 1:1; or
a time domain pattern semi-statically configured by the network device.

In some embodiments, the distribution of the first mode and the second mode in the time domain may be flexibly configured, which may be:
a time domain pattern dynamically configured by the network device; or
a time domain pattern semi-statically configured by the network device.

In some embodiments, the first mode and the second mode may have multiple distributions in the time domain, where:
multiple time domain pattern designs may be agreed upon by the protocol, and the time domain pattern to be used is configured by the network device dynamically or semi-statically; or
multiple time domain patterns may be semi-statically configured by the network device, and the time domain pattern to be used is dynamically configured by the network device.

Based on the solutions illustrated in FIG. 5, referring to FIG. 9, a flowchart of a method for receiving and transmitting a wake up signal provided by an embodiment of the present application is illustrated. The method may be interactively performed by a terminal device and a network device, where the terminal device may be the terminal device 120 or the terminal device 130 in the network architecture illustrated in FIG. 1, and the network device may be the network device 110 in the network architecture illustrated in FIG. 1. The method may include the following steps.

In step 901, a network device transmits a first signal within a first time interval; and correspondingly, a terminal device receives the first signal by a first receiver of the terminal device within the first time interval; where the first signal is used for waking up a second receiver of the terminal device, the first time interval being associated with a third time interval; and the third time interval is a time interval during which the terminal device receives a third signal by the second receiver.

That is, within the first time interval associated with the third time interval, the network device transmits the first signal to the terminal device, and the terminal device receives the first signal by the first receiver; where the first signal is used for waking up the second receiver of the terminal device.

The third time interval corresponds to a time interval during which the terminal device receives the third signal by the second receiver. Within the third time interval, the network device stops transmitting the first signal to the terminal device, the terminal device stops receiving the first signal by the first receiver, and the second receiver may be initiated to monitor the wake up signal. In this way, the accuracy and controllability of the network device transmitting the first signal and the terminal device monitoring the first signal may be effectively improved, and the effect of power saving of the terminal device is further optimized.

In some embodiments, an end time point of the first time interval is associated with a start time point of the third time interval.

In the solutions shown in the embodiments of the present application, the end time point of the first time interval is associated with the start time point of the third time interval, so as to provide a method for determining the first time interval by the third time interval.

In some embodiments, a start time point of a current first time interval is associated with an end time point of a previous third time interval; and correspondingly, an end time point of a current third time interval is associated with a start time point of a next first time interval. The association manner may be that the two time points are the same, or there may be a certain offset between the two time points.

In some embodiments, the end time point of the first time interval is the same as the start time point of the third time interval; or a first offset is present between the end time point of the first time interval and the start time point of the third time interval.

In the embodiments of the present application, the specific method for associating the end time point of the first time interval with the start time point of the third time interval is provided; that is, the end time point of the first time interval being associated with the start time point of the third time interval may mean that the end time point of the first time interval is the same as the start time point of the third time interval, or mean that the end time point of the first time interval is offset by a certain duration from the start time point of the third time interval.

For example, the end time point of the first time interval is the start time point of the third time interval; or there is a certain duration offset between the end time point of the first time interval and the start time point of the third time interval; or the total duration of the forward or backward offset of the end time point of the first time interval is the third time interval.

In some embodiments, a start time point of the first time interval is associated with an end time point of the third time interval.

In the solutions shown in the embodiments of the present application, the start time point of the first time interval is associated with the end time point of the third time interval, so as to provide a method for determining the first time interval by the third time interval.

In addition, an end time point of a current first time interval is associated with a start time point of a previous third time interval; and correspondingly, a start time point of a current third time interval is associated with an end time point of a next first time interval. The association manner may be that the two time points are the same, or there may be a certain offset between the two time points.

In some embodiments, the start time point of the first time interval is the same as the end time point of the third time interval; or a second offset is present between the start time point of the first time interval and the end time point of the third time interval.

In the embodiments of the present application, the specific method for associating the end time point of the first time interval with the start time point of the third time interval is provided; that is, the start time point of the first time interval being associated with the end time point of the third time interval may mean that the start time point of the first time interval is the same as the end time point of the third time interval, or mean that the start time point of the first time interval is offset by a certain duration from the end time point of the third time interval.

For example, the start time point of the first time interval is the end time point of the third time interval; or there is a certain duration offset between the start time point of the first time interval and the end time point of the third time interval; or the total duration of the forward or backward offset of the start time point of the first time interval is the third time interval.

In some embodiments, the third signal includes: a downlink signal for measurement and/or a downlink signal for synchronization.

That is, the third signal may be the downlink signal for measurement, or may be the downlink signal for synchronization, or may include both the downlink signal for measurement and the downlink signal for synchronization. In the embodiments of the present application, the downlink signal for measurement and/or synchronization are selected as the third signal, and a receiving and transmitting time interval of the first signal is associated with a receiving and transmitting time interval of the downlink signal for measurement and/or synchronization, so as to avoid the overlapping of time domain resources between the first signal and the downlink signal for measurement and/or synchronization, thereby improving resource utilization.

In some embodiments, the third time interval is predefined by a protocol; or the third time interval is semi-statically configured by the network device; or the third time interval is dynamically configured by the network device; or the third time interval is semi-statically configured and dynamically configured by the network device.

That is, the third time interval may be agreed upon by the protocol or configured by the network device (for example, the third time interval may be semi-statically configured and/or dynamically configured). The definition or configuration of the third time interval may be flexibly selected according to actual needs, which may effectively improve the flexibility and practicality of the technical solutions of the present application.

In some embodiments, the third time interval includes: one or more slots; or one or more frames; or one or more discontinuous reception cycles.

That is, the third time interval may be a slot where the third signal is located, or a frame where the third signal is located, or a DRX cycle where the third signal is located, or x slots/frames/DRX cycles where the third signal is located, which may be flexibly selected according to actual needs, thereby effectively improving the flexibility and practicality of the technical solutions of the present application.

The first signal may be the LP-WUS, the first receiver may be the LP-WUR, the second receiver may be the MR, and the third signal may be the downlink signal for MR to perform measurement and/or time-frequency synchronization.

Due to the implementation of the LP-WUR and its low sensitivity, it is very challenging to perform measurement and time-frequency synchronization by the LP-WUR only. Therefore, a feasible implementation is that the LP-WUR and the MR jointly realize the functions of measurement and time-frequency synchronization, that is, it is necessary to perform measurement relaxation processing on the MR. The terminal device needs to initiate the MR to perform measurement and time-frequency synchronization, and in this case, regardless of whether there is an LP-WUS to wake up the MR, it is necessary to initiate the MR to monitor the downlink signal. Under this context, whether to monitor the LP-WUS may be determined based on the measurement behavior of the MR.

Referring to FIG. 10, a schematic diagram for determining monitoring of LP-WUS based on MR measurement/synchronization is illustrated. Within the first time unit during which the MR performs measurement and/or time-frequency synchronization, the LP-WUS is no longer monitored by the LP-WUR; instead, the MR is initiated to monitor the wake up signal. Within the time unit during which the MR does not need to perform measurement and/or time-frequency synchronization, the LP-WUS is monitored by the LP-WUR.

When the LP-WUS signal transmitted to the UE or the terminal group where the UE is located is monitored, the MR is woken up to monitor the paging signal transmitted by the network device. While the LP-WUR wakes up the MR device and the MR device monitors the downlink signal, the LP-WUR may continue to monitor the LP-WUS or stop monitoring the LP-WUS.

The first time unit may be a slot where measurement and/or time-frequency synchronization are performed, or a frame where measurement and/or time-frequency synchronization are performed, or a DRX cycle where measurement and/or time-frequency synchronization are performed, or x slots/frames/DRX cycles where measurement and/or time-frequency synchronization are performed. The first time unit may be agreed upon by the protocol, or configured by the network device (for example, the first time unit may be semi-statically configured and/or dynamically configured).

In some embodiments, based on the solution of the step 901, the network device does not perform an operation of transmitting (i.e., the network device performs no transmission of) the first signal within a fourth time interval, and the network device transmits a downlink signal for paging received by the second receiver to the terminal device; and correspondingly, the terminal device does not perform an operation of receiving (i.e., the terminal device performs no reception of) the first signal by the first receiver, and the terminal device may receive the downlink signal for paging transmitted by the network device by the second receiver.

The fourth time interval is a time interval during which the downlink signal for paging is received by the second receiver.

That is, a time interval during which the downlink signal for paging is received by the second receiver is defined as the fourth time interval. Within the third time interval and the fourth time interval, the network device stops transmitting the first signal to the terminal device, the terminal device stops receiving the first signal by the first receiver, and the second receiver may be initiated to monitor the wake up signal.

The third time interval corresponds to a time interval during which the terminal device receives the third signal by the second receiver, and the fourth time interval corresponds to a time interval during which the second receiver receives the downlink signal for paging.

Furthermore, the occasion of the terminal device monitoring the first signal is limited by the third time interval and the fourth time interval, which may effectively improve the accuracy and controllability of the network device transmitting the first signal and the terminal device monitoring the first signal, and further optimize the effect of power saving of the terminal device.

In other embodiments, the network device may also perform the operation of transmitting the first signal within the fourth time interval, and correspondingly, the terminal device may also perform the operation of receiving the first signal by the first receiver within the fourth time interval.

In some embodiments, a start time point of the fourth time interval is the same as an end time point of the third time interval; or a third offset is present between the start time point of the fourth time interval and the end time point of the third time interval.

The embodiments of the present application are used for further illustrating the correlation between the fourth time interval and the third time interval:
the start time point of the fourth time interval may be the same as the end time point of the third time interval; or
a third offset may be present between the start time point of the fourth time interval and the end time point of the third time interval.

In a case where there is the fourth time interval, a start time point of a current first time interval is associated with an end time point of a previous fourth time interval; and correspondingly, an end time point of a current fourth time interval is associated with a start time point of a next first time interval. The association manner may be that the two time points are the same, or there may be a certain offset between the two time points.

It should be noted that the third offset may be an offset of the start point of the fourth time interval relative to the end point of the third time interval; or the fourth time interval is a time interval corresponding to a duration offset backward starting from the end point of the third time interval.

For example, the end time point of the third time interval is the start time point of the fourth time interval; or there is a certain duration offset between the end time point of the third time interval and the start time point of the fourth time interval; or the total duration of the forward or backward offset of the end time point of the third time interval is the fourth time interval.

In some embodiments, the fourth time interval includes: one or more slots; or one or more frames; or one or more discontinuous reception cycles.

That is, the fourth time interval may be a slot where the downlink signal for paging is located, or a frame where the downlink signal for paging is located, or a DRX cycle where the downlink signal for paging is located, or x slots/frames/DRX cycles where the downlink signal for paging is located, which may be flexibly selected according to actual needs, thereby effectively improving the flexibility and practicality of the technical solutions of the present application.

In some embodiments, the fourth time interval is predefined by a protocol; or the fourth time interval is semi-statically configured by the network device; or the fourth time interval is dynamically configured by the network device; or the fourth time interval is semi-statically configured and dynamically configured by the network device.

That is, the fourth time interval may be agreed upon by the protocol or configured by the network device (for example, the fourth time interval may be semi-statically configured and/or dynamically configured). The definition or configuration of the fourth time interval may be flexibly selected according to actual needs, which may effectively improve the flexibility and practicality of the technical solutions of the present application.

It should be noted that the fourth time interval being defined by the protocol or configured by the network may mean that the time domain offset and/or duration of the fourth time interval relative to the third time interval is predefined by the protocol or configured by the network device; or mean that the fourth time interval here is defined by the protocol or configured by the network, or may also mean that the start time domain location and/or duration of the fourth time interval is predefined by the protocol or configured by the network device.

The above first signal may be the LP-WUS, the first receiver may be the LP-WUR, the second receiver may be the MR, and the third signal may be the downlink signal for MR to perform measurement and/or time-frequency synchronization.

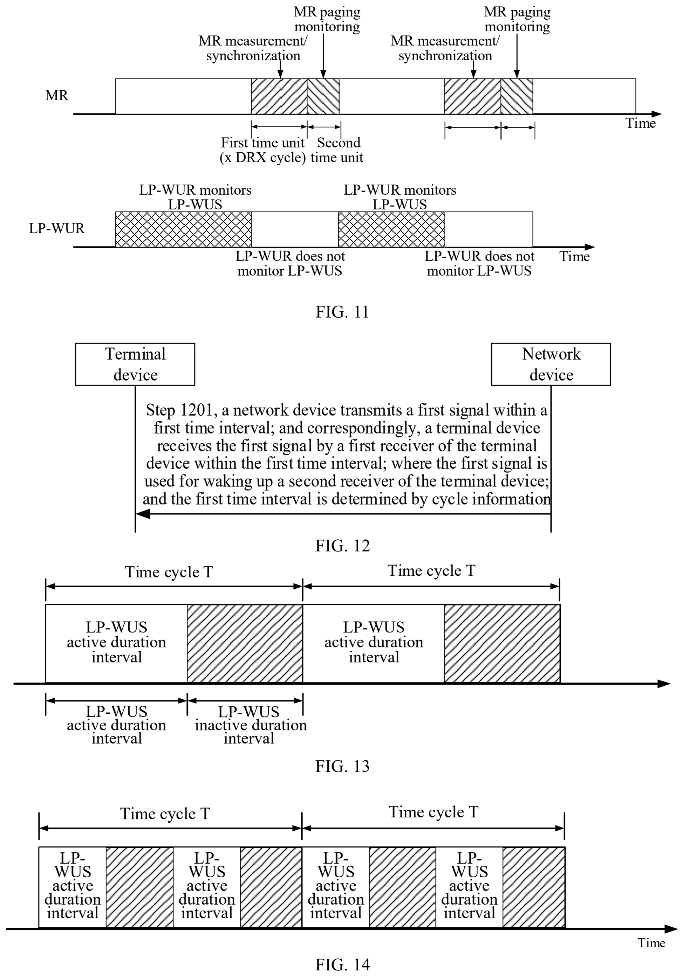

Referring to FIG. 11, a schematic diagram for determining monitoring of LP-WUS based on MR measurement/synchronization/paging is illustrated.

As illustrated in FIG. 11, within the first time unit during which the MR performs measurement and/or time-frequency synchronization and within the second time unit after the MR performs measurement and/or time-frequency synchronization, the LP-WUS is no longer monitored by the LP-WUR; instead, the MR is initiated to monitor the wake up signal. Within the time unit during which the MR does not need to perform measurement and/or time-frequency synchronization, the LP-WUS is monitored by the LP-WUR, and when the LP-WUS signal transmitted to the UE or the terminal group where the UE is located is monitored, the MR is woken up to monitor the paging transmitted by the network device. While the LP-WUR wakes up the MR and the MR device monitors the downlink signal, the LP-WUR may continue to monitor the LP-WUS or stop monitoring the LP-WUS.

The first time unit may be a slot where measurement and/or time-frequency synchronization are performed, or a frame where measurement and/or time-frequency synchronization are performed, or a DRX cycle where measurement and/or time-frequency synchronization are performed, or x slots/frames/DRX cycles where measurement and/or time-frequency synchronization are performed. The first time unit may be agreed upon by the protocol, or configured by the network device (for example, the first time unit may be semi-statically configured and/or dynamically configured).

The second time unit may be equal to or different from the first time unit, or be implemented based on a delay timer. The second time unit may be x slots/frames/DRX cycles, or the like; the second time unit may be a time offset based on the first time unit; or the second time unit may be agreed upon by a protocol or configured by the network device (for example, the second time unit may be semi-statically configured and/or dynamically configured).

Based on the solutions shown in FIG. 5, referring to FIG. 12, a flowchart of a method for receiving and transmitting a wake up signal provided by an embodiment of the present application is illustrated. The method may be interactively performed by a terminal device and a network device, where the terminal device may be the terminal device 120 or the terminal device 130 in the network architecture illustrated in FIG. 1, and the network device may be the network device 110 in the network architecture illustrated in FIG. 1. The method may include the following steps.

In step 1201, a network device transmits a first signal within a first time interval; and correspondingly, a terminal device receives the first signal by a first receiver of the terminal device within the first time interval; where the first signal is used for waking up a second receiver of the terminal device; and the first time interval is determined by cycle information, the cycle information being used for indicating a first cycle during which the first signal is received.

That is, within the first time interval determined by the cycle information, the network device transmits the first signal to the terminal device, and the terminal device receives the first signal by the first receiver; where the first signal is used for waking up the second receiver of the terminal device, and the cycle information is used for indicating the first cycle during which the first signal is received.

The first time interval is determined by the cycle information, and the cycle information may be used for indicating the first cycle during which the first signal is received. During the first cycle for receiving the first signal, the network device may transmit the first signal, and the terminal device may receive the first signal by the first receiver of the terminal device; conversely, the network device stops transmitting the first signal, and the terminal device stops receiving the first signal by the first receiver of the terminal device. In this way, the accuracy and controllability of the network device transmitting the first signal and the terminal device monitoring the first signal are improved, and the effect of power saving of the terminal device is further optimized.

In some embodiments, one first cycle includes one or more active duration intervals (i.e., at least one active duration interval) and one or more inactive time intervals (at least one inactive time interval); and the first time interval is associated with the active duration interval.

That is, one first cycle may have one active duration interval and one inactive time interval; or have one active duration interval and multiple inactive time intervals; or have multiple active duration intervals and one inactive time interval; or have multiple active duration intervals and multiple inactive time intervals. The combination of time intervals within the first cycle may be flexibly configured according to actual needs, thereby improving the flexibility and practicality of the technical solutions of the present application.

The first time interval is associated with the active duration interval.

In some embodiments, the first time interval includes the active duration interval.

The embodiments of the present application are used for illustrating the specific method in which the first time interval is associated with the active duration interval. That is, the first time interval includes at least one active duration interval.

When the first time interval includes the active duration interval, the first time interval may be a general concept, which generally refers to multiple time intervals, each time interval corresponds to an active duration interval within the first cycle. That is, the first time interval generally refers to a time interval such as the active duration interval within the first cycle.

For example, assuming that one first cycle includes two active duration intervals, and the terminal device needs to receive the first signal within multiple first cycles, then the first time interval generally refers to each active duration interval within the multiple first cycles.

In some embodiments, at least one of a duration of the first cycle, a duration of the active duration interval or a duration of the inactive time interval is predefined by a protocol; or at least one of a duration of the first cycle, a duration of the active duration interval or a duration of the inactive time interval is semi-statically configured by a network device; or at least one of a duration of the first cycle, a duration of the active duration interval or a duration of the inactive time interval is dynamically configured by the network device; or at least one of a duration of the first cycle, a duration of the active duration interval or a duration of the inactive time interval is semi-statically configured and dynamically configured by the network device.

That is, the definition or configuration of the duration of the first cycle, the duration of the active duration interval and the duration of the inactive time interval may be agreed upon by the protocol, or configured by the network device (for example, may be semi-statically configured and dynamically configured), which may be flexibly selected according to actual needs, thereby effectively improving the flexibility and practicality of the technical solutions of the present application.

In some embodiments, the first cycle is associated with a second cycle during which the second receiver performs measurement.

That is, the first cycle is associated with the second cycle during which the second receiver performs measurement. The embodiments of the present application are used for illustrating the correlation between the first cycle and the second cycle. As mentioned above, one first cycle includes one or more active duration intervals and one or more inactive time intervals. Therefore, the correlation here may be that:
the inactive time interval within the first cycle is associated with a time interval used for measurement within the second cycle; and/or
the active duration interval within the first cycle is associated with a time interval not used for measurement within the second cycle.

In some embodiments, at least one of the duration of the first cycle, the duration of the active duration interval, and the duration of the inactive time interval is associated with the second cycle during which the second receiver performs measurement.

The embodiments of the present application are used for illustrating the specific method in which the first cycle is associated with the second cycle during which the second receiver performs measurement. The association here may be a duration, that is, at least one of the duration of the first cycle, the duration of the active duration interval and the duration of the inactive time interval is associated with the second cycle during which the second receiver performs measurement.

In some embodiments, the duration of the first cycle is an integer multiple of a duration of the second cycle; or a duration of the second cycle is an integer multiple of the duration of the first cycle.

The embodiments of the present application are used for illustrating the specific method in which the duration of the first cycle is associated with the duration of the second cycle. The duration of the first cycle and the duration of the second cycle may be integer multiples of each other, that is, the duration of the first cycle is an integer multiple of the duration of the second cycle; or the duration of the second cycle is an integer multiple of the duration of the first cycle (in other words, the duration of the first cycle is a factor of the duration of the second cycle).

Specifically, for example, if the duration of the first cycle is 8 slots, the duration of the second cycle may be 1 slot, 2 slots, 4 slots, 8 slots, 16 slots, 24 slots, or the like.

In some embodiments, the duration of the active duration interval is an integer multiple of a duration of a time interval used for measurement within the second cycle; or the duration of a time interval used for measurement within the second cycle is an integer multiple of the duration of the active duration interval.

The embodiments of the present application are used for illustrating the specific method in which the duration of the first cycle is associated with the duration of the second cycle. The duration of the active duration interval and the duration of the time interval used for measurement within the second cycle may be integer multiples of each other, that is, the duration of the active duration interval is an integer multiple of the duration of the time interval used for measurement within the second cycle; or the duration of the time interval used for measurement within the second cycle is an integer multiple of the duration of the active duration interval.

Specifically, for example, if the duration of the active duration interval is 8 slots, the duration of the time interval used for measurement within the second cycle may be 1 slot, 2 slots, 4 slots, 8 slots, 16 slots, 24 slots, or the like.

In some embodiments, the duration of the inactive time interval is an integer multiple of a duration of a time interval not used for measurement within the second cycle; or a duration of a time interval not used for measurement within the second cycle is an integer multiple of the duration of the inactive time interval.

The embodiments of the present application are used for illustrating the specific method in which the duration of the first cycle is associated with the duration of the second cycle. The duration of the inactive duration interval and the duration of the time interval not used for measurement within the second cycle may be integer multiples of each other, that is, the duration of the inactive duration interval is an integer multiple of the duration of the time interval not used for measurement within the second cycle; or the duration of the time interval not used for measurement within the second cycle is an integer multiple of the duration of the inactive duration interval.

Specifically, for example, if the duration of the inactive duration interval is 8 slots, the duration of the time interval not used for measurement within the second cycle may be 1 slot, 2 slots, 4 slots, 8 slots, 16 slots, 24 slots, or the like.

The first signal may be the LP-WUS, the first receiver may be the LP-WUR, and the second receiver may be the MR.

The transmitting and receiving of the LP-WUS may be periodically distributed in time, that is, the network device periodically transmits the LP-WUS, and the terminal device periodically monitors the LP-WUS. In other words, the network device and the terminal device periodically activate/deactivate the transmitting and monitoring of the LP-WUS.

Referring to FIG. 13, a schematic diagram for determining monitoring of LP-WUS based on an active cycle of LP-WUS is illustrated. The LP-WUS is activated/inactivated periodically in time. Specifically, the LP-WUS is activated once every time cycle T, and the active duration of the LP-WUS is D. Within the time cycle T, the inactive duration A of the LP-WUS is equal to T-A.

The time cycle T may be agreed upon by the protocol or configured by the network device; the active duration D of the LP-WUS may be agreed upon by the protocol or configured by the network device; and the inactive duration (time) A of the LP-WUS may be agreed upon by the protocol or configured by the network device.

At least one of T, D or A is associated with the MR measurement cycle. For example, the active cycle T of the LP-WUS is equal to the MR measurement cycle, or is an integer multiple of the MR measurement cycle, or is a factor of the MR measurement cycle.

At least one of T, D or A is configured by the network device.

During the active duration D of the LP-WUS, the network device transmits the LP-WUS to the terminal device, and the terminal device receives the LP-WUS through the LP-WUR; where the LP-WUS is used for waking up the MR of the terminal device. During the inactive duration A of the LP-WUS, the network device stops transmitting the LP-WUS to the terminal device, and the terminal device stops receiving the LP-WUS by the LP-WUR.

In other embodiments, based on the solutions shown in FIG. 13, there may be multiple LP-WUS activation occasions within the time cycle T, that is, there are multiple LP-WUS active duration distributions within the time cycle T.

Referring to FIG. 14, another schematic diagram for determining monitoring of LP-WUS based on an active cycle of LP-WUS is illustrated. Within the time period T, there are two LP-WUS activation occasions, that is, within the time cycle T, there are two LP-WUS active duration distributions.

During the two LP-WUS activation occasions, the network device transmits the LP-WUS to the terminal device, and the terminal device receives the LP-WUS by the LP-WUR; where the LP-WUS is used for waking up the MR of the terminal device. During the two LP-WUS inactive occasions, the network device stops transmitting the LP-WUS to the terminal device, and the terminal device stops receiving the LP-WUS by the LP-WUR.

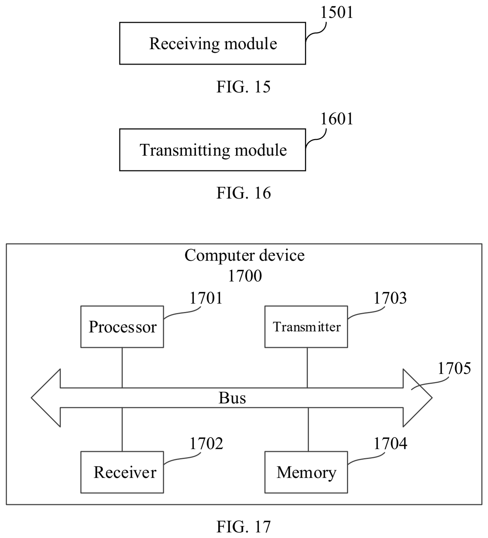

Referring to FIG. 15, a block diagram of an apparatus for receiving a wake up signal provided by an embodiment of the present application is illustrated. The apparatus for receiving the wake up signal has the functions performed by a terminal device for implementing the methods illustrated in FIG. 5, FIG. 6, FIG. 9 or FIG. 12. As illustrated in FIG. 15, the apparatus may include:
a receiving module 1501, configured to receive a first signal by a first receiver of a terminal device within a first time interval; where the first signal is used for waking up a second receiver of the terminal device.

In some embodiments, the first time interval is determined by a time domain pattern.

In some embodiments, the time domain pattern includes a first time domain pattern, the first time domain pattern being used for indicating distribution of resource locations of a first resource in time domain; and the first time interval is a time interval corresponding to the first resource.

In some embodiments, the first resource is a resource through which a network device transmits the first signal.

In some embodiments, the first resource is a resource corresponding to a first mode.

In some embodiments, the first mode is a mode in which a network device transmits the first signal; and/or the first mode is a mode in which the terminal device receives the first signal.

In some embodiments, the time domain pattern further includes a second time domain pattern, the second time domain pattern being used for indicating distribution of resource locations of a second resource in time domain; and the receiving module 1501 is further configured to receive a second signal by the second receiver within a second time interval corresponding to the second resource.

In some embodiments, the second signal includes a downlink signal for paging.

In some embodiments, the second resource is a resource through which the network device transmits the second signal.

In some embodiments, the second resource is a resource corresponding to a second mode.

In some embodiments, the second mode is a mode in which a network device transmits the second signal; and/or the second mode is a mode in which the terminal device receives the second signal.

In some embodiments, the time domain pattern is predefined by a protocol; or the time domain pattern is semi-statically configured by the network device; or the time domain pattern is dynamically configured by the network device; or the time domain pattern is semi-statically configured and dynamically configured by the network device.

In some embodiments, the first time interval is associated with a third time interval; and the third time interval is a time interval during which a third signal is received by the second receiver.

In some embodiments, an end time point of the first time interval is associated with a start time point of the third time interval.

In some embodiments, the end time point of the first time interval is the same as the start time point of the third time interval; or a first offset is present between the end time point of the first time interval and the start time point of the third time interval.

In some embodiments, a start time point of the first time interval is associated with an end time point of the third time interval.

In some embodiments, the start time point of the first time interval is the same as the end time point of the third time interval; or a second offset is present between the start time point of the first time interval and the end time point of the third time interval.

In some embodiments, the third signal includes: a downlink signal for measurement and/or a downlink signal for synchronization.

In some embodiments, the third time interval is predefined by the protocol; or the third time interval is semi-statically configured by a network device; or the third time interval is dynamically configured by a network device; or the third time interval is semi-statically configured and dynamically configured by a network device.

In some embodiments, the third time interval includes: one or more slots; or one or more frames; or one or more discontinuous reception cycles.

In some embodiments, the receiving module 1501 is further configured to perform no reception of the first signal by the first receiver within a fourth time interval; where the fourth time interval is a time interval during which a downlink signal for paging is received by the second receiver.

In some embodiments, a start time point of the fourth time interval is the same as an end time point of the third time interval; or a third offset is present between a start time point of the fourth time interval and an end time point of the third time interval.

In some embodiments, the fourth time interval includes: one or more slots; or one or more frames; or one or more discontinuous reception cycles.

In some embodiments, the fourth time interval is predefined by a protocol; or the fourth time interval is semi-statically configured by a network device; or the fourth time interval is dynamically configured by a network device; or the fourth time interval is semi-statically configured and dynamically configured by a network device.

In some embodiments, the first time interval is determined by cycle information; and the cycle information is used to indicate a first cycle during which the first signal is received.

In some embodiments, one first cycle includes at least one active duration interval and at least one inactive time interval; and the first time interval is associated with the active duration interval.

In some embodiments, the first time interval includes the active duration interval.

In some embodiments, at least one of a duration of the first cycle, a duration of the active duration interval or a duration of the inactive time interval is predefined by a protocol; or at least one of a duration of the first cycle, a duration of the active duration interval or a duration of the inactive time interval is semi-statically configured by a network device; or at least one of a duration of the first cycle, a duration of the active duration interval or a duration of the inactive time interval is dynamically configured by the network device; or at least one of a duration of the first cycle, a duration of the active duration interval or a duration of the inactive time interval is semi-statically configured and dynamically configured by the network device.

In some embodiments, the first cycle is associated with a second cycle during which the second receiver performs measurement.

In some embodiments, at least one of a duration of the first cycle, a duration of an active duration interval or a duration of an inactive time interval is associated with the second cycle during which the second receiver performs measurement.

In some embodiments, the duration of the first cycle is an integer multiple of a duration of the second cycle; or a duration of the second cycle is an integer multiple of the duration of the first cycle.

In some embodiments, the duration of the active duration interval is an integer multiple of a duration of a time interval used for measurement within the second cycle; or a duration of a time interval used for measurement within the second cycle is an integer multiple of the duration of the active duration interval.

In some embodiments, the duration of the inactive time interval is an integer multiple of a duration of a time interval not used for measurement within the second cycle; or a duration of a time interval not used for measurement within the second cycle is an integer multiple of the duration of the inactive time interval.

Referring to FIG. 16, a block diagram of an apparatus for transmitting a wake up signal provided by an embodiment of the present application is illustrated. The apparatus for transmitting the wake up signal has the functions performed by a network device for implementing the methods illustrated in FIG. 5, FIG. 6, FIG. 9 or FIG. 12,. As illustrated in FIG. 16, the apparatus may include:
a transmitting module 1601, configured to transmit a first signal to a terminal device within a first time interval; where the first signal is received by a first receiver of the terminal device, and the first signal is used for waking up a second receiver of the terminal device.

In some embodiments, the first time interval is determined by a time domain pattern.

In some embodiments, the time domain pattern includes a first time domain pattern, the first time domain pattern being used for indicating distribution of resource locations of a first resource in time domain; and the first time interval is a time interval corresponding to the first resource.

In some embodiments, the first resource is a resource through which the network device transmits the first signal.

In some embodiments, the first resource is a resource corresponding to a first mode.

In some embodiments, the first mode is a mode in which the network device transmits the first signal; and/or the first mode is a mode in which the terminal device receives the first signal.

In some embodiments, the time domain pattern further includes a second time domain pattern, the second time domain pattern being used for indicating distribution of resource locations of a second resource in time domain.

The transmitting module 1601 is further configured to transmit a second signal to the terminal device within a second time interval corresponding to the second resource; and the second signal is received by the second receiver.

In some embodiments, the second signal includes a downlink signal for paging.

In some embodiments, the second resource is a resource through which the network device transmits the second signal.

In some embodiments, the second resource is a resource corresponding to a second mode.

In some embodiments, the second mode is a mode in which the network device transmits the second signal; and/or the second mode is a mode in which the terminal device receives the second signal.

In some embodiments, the time domain pattern is predefined by a protocol; or the time domain pattern is semi-statically configured by the network device; or the time domain pattern is dynamically configured by the network device; or the time domain pattern is semi-statically configured and dynamically configured by the network device.

In some embodiments, the first time interval is associated with a third time interval; and the third time interval is a time interval during which the terminal device receives a third signal by the second receiver.

In some embodiments, an end time point of the first time interval is associated with a start time point of the third time interval.

In some embodiments, the end time point of the first time interval is the same as the start time point of the third time interval; or a first offset is present between the end time point of the first time interval and the start time point of the third time interval.

In some embodiments, a start time point of the first time interval is associated with an end time point of the third time interval.

In some embodiments, the start time point of the first time interval is the same as the end time point of the third time interval; or a second offset is present between the start time point of the first time interval and the end time point of the third time interval.

In some embodiments, the third signal includes: a downlink signal for measurement and/or a downlink signal for synchronization.

In some embodiments, the third time interval is predefined by the protocol; or the third time interval is semi-statically configured by the network device; or the third time interval is dynamically configured by the network device; or the third time interval is semi-statically configured and dynamically configured by the network device.

In some embodiments, the third time interval includes: one or more slots; or one or more frames; or one or more discontinuous reception cycles.

In some embodiments, the transmitting module 1601 is further configured to transmit a downlink signal for paging received by the second receiver to the terminal device within a fourth time interval; where the fourth time interval is a time interval during which the downlink signal for paging is received by the second receiver.

In some embodiments, a start time point of the fourth time interval is the same as an end time point of the third time interval; or, a third offset is present between a start time point of the fourth time interval and an end time point of the third time interval.

In some embodiments, the fourth time interval includes: one or more slots; or one or more frames; or one or more discontinuous reception cycles.

In some embodiments, the fourth time interval is predefined by a protocol; or the fourth time interval is semi-statically configured by the network device; or the fourth time interval is dynamically configured by the network device; or the fourth time interval is semi-statically configured and dynamically configured by the network device.

In some embodiments, the first time interval is determined by cycle information.

The cycle information is used for indicating a first cycle during which the first signal is received.

In some embodiments, one first cycle includes at least one active duration interval and at least one inactive time intervals.

The first time interval is associated with the active duration interval.

In some embodiments, the first time interval includes the active duration interval.

In some embodiments, at least one of a duration of the first cycle, a duration of the active duration interval or a duration of the inactive time interval is predefined by a protocol; or at least one of a duration of the first cycle, a duration of the active duration interval or a duration of the inactive time interval is semi-statically configured by a network device; or at least one of a duration of the first cycle, a duration of the active duration interval or a duration of the inactive time interval is dynamically configured by the network device; or at least one of a duration of the first cycle, a duration of the active duration interval or a duration of the inactive time interval is semi-statically configured and dynamically configured by the network device.

In some embodiments, the first cycle is associated with a second cycle during which the second receiver performs measurement.

In some embodiments, at least one of a duration of the first cycle, a duration of an active duration interval or a duration of an inactive time interval is associated with the second cycle during which the second receiver performs measurement.

In some embodiments, the duration of the first cycle is an integer multiple of a duration of the second cycle; or a duration of the second cycle is an integer multiple of the duration of the first cycle.

In some embodiments, the duration of the active duration interval is an integer multiple of a duration of a time interval used for measurement within the second cycle; or a duration of a time interval used for measurement within the second cycle is an integer multiple of the duration of the active duration interval.

In some embodiments, the duration of the inactive time interval is an integer multiple of a duration of a time interval not used for measurement within the second cycle; or a duration of a time interval not used for measurement within the second cycle is an integer multiple of the duration of the inactive time interval.

It should be noted that, when the apparatuses provided by the above embodiments implement their functions, only the division of various functional modules described above is illustrated as an example. In actual applications, the functions described above may be assigned to different functional modules to be implemented according to actual needs; that is, the content structure of a device may be divided into different functional modules to implement all or part of the functions described above.

For the apparatuses in the above embodiments, the specific manners in which various modules performs operations have been described in detail in the method embodiments, which will not be repeated here.

Referring to FIG. 17, a schematic structural diagram of a communication device 1700 provided by an embodiment of the present application is illustrated. The communication device 1700 may include: a processor 1701, a receiver 1702, a transmitter 1703, a memory 1704 and a bus 1705.

The processor 1701 includes one or more processing cores. The processor 1701 executes various functional applications and information processing by running software programs and modules.

The receiver 1702 and the transmitter 1703 may be implemented as a communication component, which may be a communication chip. The communication chip may also be referred to as a transceiver. The memory 1704 is connected to the processor 1701 via a bus 1705. The memory 1704 may be configured to store a computer program, and the processor 1701 may be configured to execute the computer program to implement various steps in the above method embodiments.

In addition, the memory 1704 may be implemented by any type of volatile or non-volatile storage device or a combination thereof, and the volatile or non-volatile storage device includes but is not limited to: a magnetic disk or an optical disk, an electrically erasable programmable read-only memory, an erasable programmable read-only memory, a static access memory, a read-only memory, a magnetic memory, a flash memory, and a programmable read-only memory.

In an exemplary embodiment, when the communication device 1700 is implemented as the above terminal device, the receiver 1702 and the processor 1701 execute a computer program to enable the communication device to implement the various steps performed by the terminal device in any of the methods illustrated in FIG. 5, FIG. 6, FIG. 9 or FIG. 12. In this case, the receiver 1702 may correspondingly implement the methods and steps implemented by the receiving module 1501 in FIG. 15, and the transmitter 1703 may correspondingly implement the methods and steps implemented by the transmitting module in FIG. 15.

In an exemplary embodiment, when the communication device 1700 is implemented as the above network device, the transmitter 1703 and the processor 1701 execute a computer program to enable the communication device to implement the various steps performed by the network device in any of the methods illustrated in FIG. 5, FIG. 6, FIG. 9 or FIG. 12. In this case, the transmitter 1703 may correspondingly implement the methods and steps implemented by the transmitting module 1601 in FIG. 16, and the receiver 1702 may correspondingly implement the methods and steps implemented by the receiving module in FIG. 16.

The embodiments of the present application further provide a computer-readable storage medium, and the storage medium has a computer program stored therein. The computer program is loaded and executed by a processor to implement all or part of the steps performed by the terminal device or network device in the method illustrated in FIG. 5, FIG. 6, FIG. 9 or FIG. 12.

The present application further provides a chip, and the chip is used to run in a communication device, to enable the communication device to execute all or part of the steps performed by the terminal device or network device in the method illustrated in FIG. 5, FIG. 6, FIG. 9 or FIG. 12.

The present application further provides a computer program product, where the computer program product or computer program includes computer instructions, and the computer instructions are stored in a computer-readable storage medium. The processor of the communication device reads the computer instructions from the computer-readable storage medium, and the processor executes the computer instructions, to enable the communication device to execute all or part of the steps performed by the terminal device or network device in the method illustrated in FIG. 5, FIG. 6, FIG. 9 or FIG. 12.

The present application further provides a computer program, and the computer program is executed by the processor of the communication device to implement all or part of the steps performed by the terminal device or the network device in the method illustrated in FIG. 5, FIG. 6, FIG. 9 or FIG. 12.

Those skilled in the art should be appreciate that in one or more of the above examples, the functions described in the embodiments of the present application may be implemented in hardware, software, firmware or any combination thereof. When implemented in software, the functions may be stored in a computer-readable medium or transmitted as one or more instructions or codes in a computer-readable medium. The computer-readable media includes both a computer storage media and a communication media, where the communication media includes any medium that facilitates transfer of a computer program from one place to another. The storage media may be any available media that may be accessed by a general purpose or special purpose computer.

The above descriptions are merely exemplary embodiments of the present application and are not intended to limit the present application. Any modifications, equivalent substitutions, improvements, or the like made within the spirit and principles of the present application shall be included within the scope of protection of the present application.

## Claims

1. A method for receiving a wake up signal, performed by a terminal device and comprising:
receiving, by a first receiver of the terminal device, a first signal within a first time interval; wherein the first signal is used for waking up a second receiver of the terminal device.

2. The method according to claim 1, wherein the first time interval is determined by a time domain pattern.

3. The method according to claim 2, wherein the time domain pattern comprises a first time domain pattern, the first time domain pattern being used for indicating distribution of resource locations of a first resource in time domain, and the first time interval being a time interval corresponding to the first resource.

4. The method according to claim 3, wherein the first resource is a resource through which a network device transmits the first signal.

5. The method according to claim 3, wherein the first resource is a resource corresponding to a first mode.

6. The method according to claim 5, wherein
the first mode is a mode in which a network device transmits the first signal; and/or
the first mode is a mode in which the terminal device receives the first signal.

7. The method according to any one of claims 2 to 6, wherein the time domain pattern further comprises a second time domain pattern, the second time domain pattern being used for indicating distribution of resource locations of a second resource in time domain; and
the method further comprises:
receiving, by the second receiver, a second signal within a second time interval corresponding to the second resource.

8. The method according to claim 7, wherein the second signal comprises a downlink signal for paging.

9. The method according to claim 7 or 8, wherein the second resource is a resource through which the network device transmits the second signal.

10. The method according to claim 7 or 8, wherein the second resource is a resource corresponding to a second mode.

11. The method according to claim 10, wherein
the second mode is a mode in which a network device transmits the second signal; and/or
the second mode is a mode in which the terminal device receives the second signal.

12. The method according to any one of claims 2 to 11, wherein
the time domain pattern is predefined by a protocol; or
the time domain pattern is semi-statically configured by a network device; or
the time domain pattern is dynamically configured by a network device; or
the time domain pattern is semi-statically configured and dynamically configured by a network device.

13. The method according to claim 1, wherein the first time interval is associated with a third time interval; and
the third time interval is a time interval during which a third signal is received by the second receiver.

14. The method according to claim 13, wherein an end time point of the first time interval is associated with a start time point of the third time interval.

15. The method according to claim 14, wherein the end time point of the first time interval is the same as the start time point of the third time interval;
or
a first offset is present between the end time point of the first time interval and the start time point of the third time interval.

16. The method according to claim 13, wherein a start time point of the first time interval is associated with an end time point of the third time interval.

17. The method according to claim 16, wherein the start time point of the first time interval is the same as the end time point of the third time interval;
or
a second offset is present between the start time point of the first time interval and the end time point of the third time interval.

18. The method according to any one of claims 13 to 17, wherein the third signal comprises:
a downlink signal for measurement and/or a downlink signal for synchronization.

19. The method according to any one of claims 13 to 18, wherein
the third time interval is predefined by a protocol; or
the third time interval is semi-statically configured by a network device; or
the third time interval is dynamically configured by a network device; or
the third time interval is semi-statically configured and dynamically configured by a network device.

20. The method according to any one of claims 13 to 19, wherein the third time interval comprises:
one or more slots; or
one or more frames; or
one or more discontinuous reception cycles.

21. The method according to any one of claims 13 to 20, further comprising:
performing no reception of the first signal by the first receiver within a fourth time interval;
wherein the fourth time interval is a time interval during which a downlink signal for paging is received by the second receiver.

22. The method according to claim 21, wherein
a start time point of the fourth time interval is the same as an end time point of the third time interval;
or
a third offset is present between a start time point of the fourth time interval and an end time point of the third time interval.

23. The method according to claim 21 or 22, wherein the fourth time interval comprises:
one or more slots; or
one or more frames; or
one or more discontinuous reception cycles.

24. The method according to any one of claims 21 to 23, wherein
the fourth time interval is predefined by a protocol; or
the fourth time interval is semi-statically configured by a network device; or
the fourth time interval is dynamically configured by a network device; or
the fourth time interval is semi-statically configured and dynamically configured by a network device.

25. The method according to claim 1, wherein the first time interval is determined by cycle information; and
the cycle information is used for indicating a first cycle during which the first signal is received.

26. The method according to claim 25, wherein one first cycle comprises at least one active duration interval and at least one inactive time interval; and
the first time interval is associated with the active duration interval.

27. The method according to claim 26, wherein the first time interval comprises the active duration interval.

28. The method according to claim 26 or 27, wherein
at least one of a duration of the first cycle, a duration of the active duration interval or a duration of the inactive time interval is predefined by a protocol; or
at least one of a duration of the first cycle, a duration of the active duration interval or a duration of the inactive time interval is semi-statically configured by a network device; or
at least one of a duration of the first cycle, a duration of the active duration interval or a duration of the inactive time interval is dynamically configured by a network device; or
at least one of a duration of the first cycle, a duration of the active duration interval or a duration of the inactive time interval is semi-statically configured and dynamically configured by a network device.

29. The method according to any one of claims 25 to 28, wherein the first cycle is associated with a second cycle during which the second receiver performs measurement.

30. The method according to claim 29, wherein at least one of a duration of the first cycle, a duration of an active duration interval or a duration of an inactive time interval is associated with the second cycle during which the second receiver performs measurement.

31. The method according to claim 30, wherein
the duration of the first cycle is an integer multiple of a duration of the second cycle; or
a duration of the second cycle is an integer multiple of the duration of the first cycle.

32. The method according to claim 30 or 31, wherein
the duration of the active duration interval is an integer multiple of a duration of a time interval used for measurement within the second cycle; or
a duration of a time interval used for measurement within the second cycle is an integer multiple of the duration of the active duration interval.

33. The method according to claim 30 or 31, wherein
the duration of the inactive time interval is an integer multiple of a duration of a time interval not used for measurement within the second cycle; or
a duration of a time interval not used for measurement within the second cycle is an integer multiple of the duration of the inactive time interval.

34. A method for transmitting a wake up signal, performed by a network device and comprising:
transmitting a first signal to a terminal device within a first time interval;
wherein the first signal is received by a first receiver of the terminal device, and the first signal is used for waking up a second receiver of the terminal device.

35. The method according to claim 34, wherein the first time interval is determined by time domain pattern.

36. The method according to claim 35, wherein the time domain pattern comprises a first time domain pattern, the first time domain pattern being used for indicating distribution of resource locations of a first resource in time domain, and the first time interval being a time interval corresponding to the first resource.

37. The method according to claim 36, wherein the first resource is a resource through which the network device transmits the first signal.

38. The method according to claim 36, wherein the first resource is a resource corresponding to a first mode.

39. The method according to claim 38, wherein
the first mode is a mode in which the network device transmits the first signal; and/or
the first mode is a mode in which the terminal device receives the first signal.

40. The method according to any one of claims 35 to 39, wherein the time domain pattern further comprises a second time domain pattern, the second time domain pattern being used for indicating distribution of resource locations of a second resource in time domain; and
the method further comprises:
transmitting a second signal to the terminal device within a second time interval corresponding to the second resource, wherein the second signal is received by the second receiver.

41. The method according to claim 40, wherein the second signal comprises a downlink signal for paging.

42. The method according to claim 40 or 41, wherein the second resource is a resource through which the network device transmits the second signal.

43. The method according to claim 40 or 41, wherein the second resource is a resource corresponding to a second mode.

44. The method according to claim 43, wherein
the second mode is a mode in which the network device transmits the second signal; and/or
the second mode is a mode in which the terminal device receives the second signal.

45. The method according to any one of claims 35 to 44, wherein
the time domain pattern is predefined by a protocol; or
the time domain pattern is semi-statically configured by the network device; or
the time domain pattern is dynamically configured by the network device; or
the time domain pattern is semi-statically configured and dynamically configured by the network device.

46. The method of claim 34, wherein the first time interval is associated with a third time interval; and
the third time interval is a time interval during which the terminal device receives a third signal by the second receiver.

47. The method according to claim 46, wherein an end time point of the first time interval is associated with a start time point of the third time interval.

48. The method according to claim 47, wherein the end time point of the first time interval is the same as the start time point of the third time interval;
or
a first offset is present between the end time point of the first time interval and the start time point of the third time interval.

49. The method according to claim 46, wherein a start time point of the first time interval is associated with an end time point of the third time interval.

50. The method according to claim 49, wherein the start time point of the first time interval is the same as the end time point of the third time interval;
or
a second offset is present between the start time point of the first time interval and the end time point of the third time interval.

51. The method according to any one of claims 46 to 50, wherein the third signal comprises:
a downlink signal for measurement and/or a downlink signal for synchronization.

52. The method according to any one of claims 46 to 51, wherein
the third time interval is predefined by a protocol; or
the third time interval is semi-statically configured by the network device; or
the third time interval is dynamically configured by the network device; or
the third time interval is semi-statically configured and dynamically configured by the network device.

53. The method according to any one of claims 46 to 52, wherein the third time interval comprises:
one or more slots; or
one or more frames; or
one or more discontinuous reception cycles.

54. The method according to any one of claims 46 to 53, further comprising:
transmitting a downlink signal for paging received by the second receiver to the terminal device within a fourth time interval;
wherein the fourth time interval is a time interval during which the downlink signal for paging is received by the second receiver.

55. The method according to claim 54, wherein
a start time point of the fourth time interval is the same as an end time point of the third time interval; or
a third offset is present between a start time point of the fourth time interval and an end time point of the third time interval.

56. The method according to claim 54 or 55, wherein the fourth time interval comprises:
one or more slots; or
one or more frames; or
one or more discontinuous reception cycles.

57. The method according to any one of claims 54 to 56, wherein
the fourth time interval is predefined by a protocol; or
the fourth time interval is semi-statically configured by the network device; or
the fourth time interval is dynamically configured by the network device; or
the fourth time interval is semi-statically configured and dynamically configured by the network device.

58. The method according to claim 34, wherein the first time interval is determined by cycle information; and
the cycle information is used for indicating a first cycle during which the first signal is received.

59. The method according to claim 58, wherein one first cycle comprises at least one active duration interval and at least one inactive time intervals; and
the first time interval is associated with the active duration interval.

60. The method of claim 59, wherein the first time interval comprises the active duration interval.

61. The method according to claim 59 or 60, wherein
at least one of a duration of the first cycle, a duration of the active duration interval or a duration of the inactive time interval is predefined by a protocol; or
at least one of a duration of the first cycle, a duration of the active duration interval or a duration of the inactive time interval is semi-statically configured by the network device; or
at least one of a duration of the first cycle, a duration of the active duration interval or a duration of the inactive time interval is dynamically configured by the network device; or
at least one of a duration of the first cycle, a duration of the active duration interval or a duration of the inactive time interval is semi-statically configured and dynamically configured by the network device.

62. The method according to any one of claims 58 to 61, wherein the first cycle is associated with a second cycle during which the second receiver performs measurement.

63. The method according to claim 62, wherein at least one of a duration of the first cycle, a duration of an active duration interval or a duration of an inactive time interval is associated with the second cycle during which the second receiver performs measurement.

64. The method according to claim 63, wherein
the duration of the first cycle is an integer multiple of a duration of the second cycle; or
a duration of the second cycle is an integer multiple of the duration of the first cycle.

65. The method according to claim 63 or 64, wherein
the duration of the active duration interval is an integer multiple of a duration of a time interval used for measurement within the second cycle; or
a duration of a time interval used for measurement within the second cycle is an integer multiple of the duration of the active duration interval.

66. The method according to claim 63 or 64, wherein
the duration of the inactive time interval is an integer multiple of a duration of a time interval not used for measurement within the second cycle; or
a duration of a time interval not used for measurement within the second cycle is an integer multiple of the duration of the inactive time interval.

67. An apparatus for receiving a wake up signal, comprising:
a receiving module, configured to receive a first signal by a first receiver of a terminal device within a first time interval; wherein the first signal is used for waking up a second receiver of the terminal device.

68. An apparatus for transmitting a wake up signal, comprising:
a transmitting module, configured to transmit a first signal by a network device within a first time interval; wherein the first signal is used for waking up a second receiver of a terminal device.

69. A terminal device, comprising: a processor, a memory and a transceiver;
wherein the memory has a computer program stored therein, and the processor is configured to execute the computer program, to enable the terminal device to implement the method for receiving a wake up signal according to any one of claims 1 to 33.

70. A network device, comprising: a processor, a memory and a transceiver;
wherein the memory has a computer program stored therein, and the processor is configured to execute the computer program, to enable the network device to implement the method for transmitting a wake up signal according to any one of claims 34 to 66.

71. A computer-readable storage medium, having a computer program stored therein, wherein the computer program is used for being executed by a processor of a communication device, to enable the communication device to implement the method for receiving a wake up signal or the method for transmitting a wake up signal according to any one of claims 1 to 66.

72. A chip, comprising: a programmable logic circuit and/or program instructions, wherein the chip is used to run in a communication device, to enable the communication device to perform the method for receiving a wake up signal according to any one of claims 1 to 33, or the method for transmitting a wake up signal according to any one of claims 34 to 66.

73. A computer program product, comprising: computer instructions, wherein the computer instructions are stored in a computer-readable storage medium; and a processor of a communication device reads the computer instructions from the computer-readable storage medium and executes the computer instructions, to enable the communication device to perform the method for receiving a wake up signal according to any one of claims 1 to 33, or the method for transmitting a wake up signal according to any one of claims 34 to 66.

74. A computer program, wherein the computer program is executed by a processor of a communication device, to enable the communication device to implement the method for receiving a wake up signal according to any one of claims 1 to 33, or the method for transmitting a wake up signal according to any one of claims 34 to 66.
